# EUROPÄISCHE PATENTANMELDUNG

(11) **EP 1 264 756 A1**
(43) Veröffentlichungstag der Anmeldung: **11.12.2002**
(21) Anmeldenummer: 02009390.2
(22) Anmeldetag: 07.05.2002
(51) Int. Cl.: B62D 1/04, B62D 1/06

(54) **Verfahren zum Herstellen eines Lenkrades sowie Lenkrad**

(30) Priorität: 15.05.2001 DE 10123520
(71) Anmelder: TRW Automotive Safety Systems GmbH & Co. KG, 63743 Aschaffenburg (DE)
(72) Erfinder: Derrick, John-Oliver, 97265 Hettstadt (DE)
(74) Vertreter: Kitzhofer, Thomas, Dipl.-Ing.

(57) **Zusammenfassung**

Ein Fahrzeuglenkrad, das einen geschlossenen ringförmigen Lenkradkranz (24) und Speichen (26) aufweist, hat darüber hinaus ein Lenkradskelett (10) und eine das Lenkradskelett (10) umgebende Umschäumung (20) und/oder Belederung (22). Das einstückig ausgeführte Lenkradskelett (10) wird hergestellt und hat zur Bildung des Lenkradkranzes (24) einen geschlossenen ringförmigen Abschnitt, der im Querschnitt ein offenes Hohlprofil aufweist, in das ein Körper (16), der als Platzhalter dient, eingelegt ist oder wird, um das Hohlprofil auszufüllen, bevor es umschäumt und/oder umledert wird.

## Beschreibung

Die Erfindung betrifft ein Verfahren zum Herstellen eines Lenkrades, das einen geschlossenen ringförmigen Lenkradkranz und Speichen aufweist, mit einem Lenkradskelett und einer das Lenkradskelett umgebenden Umschäumung und/oder Belederung. Darüber hinaus betrifft die Erfindung ein Fahrzeuglenkrad, das einen geschlossenen, ringförmigen Lenkradkranz und Speichen aufweist, mit einem Lenkradskelett und einer das Lenkradskelett umgebenden Umschäumung und/oder Belederung.

Die Herstellung von Fahrzeuglenkrädern erfolgt bei der gattungsgemäßen DE 197 24 073 A1 durch Stanzen eines Blechteils, das nach dem Stanzen zu einem einteiligen Blechskelett umgeformt wird. Im Bereich des geschlossenen ringförmigen Abschnitts, der im Bereich des Lenkradkranzes das Skelett bildet, wird dieser ringförmige Abschnitt zum Beispiel durch Tiefziehen zu einem Hohlprofil gebogen, das nicht vollständig geschlossen wird. Beim anschließenden Umschäumen besteht das Ziel, daß der Schaum möglichst gleichmäßig an der Außenoberfläche anliegt, was aber aufgrund der Konturen des Skelettes nicht immer einfach zu verwirklichen ist.

Wird das Lenkradskelett zum Beispiel nur umledert, ist der Aufwand zum nahezu vollständigen Schließen des Querschnittes des Skeletts im Bereich des Lenkradkranzes relativ hoch. Ein nahezu vollständiges Schließen wird aber angestrebt, damit der Fahrer beim Eindrücken des Lenkradkranzes das Leder nicht in das Innere des Hohlprofils drücken kann.

Die Erfindung schafft ein Verfahren, mit dem das Herstellen eines qualitativ hochwertigen Lenkrades sehr kostengünstig erfolgen kann.

Dies wird durch ein Verfahren mit folgenden Schritten erreicht:
a) das einstückig ausgeführte Lenkradskelett wird hergestellt, wobei es zur Bildung des Lenkradkranzes einen geschlossenen ringförmigen Abschnitt aufweist, der im Querschnitt ein offenes Hohlprofil hat,
b) in das offene Hohlprofil ist oder wird ein Körper, der als Platzhalter dient, eingelegt, um das Hohlprofil nahezu vollständig auszufüllen, und
c) das Lenkradskelett wird wenigstens im Bereich des Lenkradkranzes umschäumt und/oder umledert.

Beim erfindungsgemäßen Verfahren wird vor oder nach dem Herstellen des Hohlprofils ein separater Körper in das offene Hohlprofil eingelegt, um dieses auszufüllen. Dieser Körper kann kostengünstig hergestellt sein, beispielsweise aus Zellulose. Damit kann in das offene Hohlprofil kein Schaum mehr eindringen, was die Qualität des umschäumten Produkts verbessert. Darüber hinaus kann relativ teurer Schaum eingespart werden, der ansonsten in das Innere des Hohlprofils eindringen würde. Das Beledern, ohne vorheriges Umschäumen, wird ebenfalls erleichtert, denn obwohl das Hohlprofil offen ist, macht es nach außen einen geschlossenen Eindruck aufgrund des eingefügten Platzhalters. Je nach verwendetem Material für den Körper kann dieser auch eine zusätzliche Verbesserung der Stabilität des Lenkradkranzes herbeiführen. Die Stabilitätsverbesserung wird insbesondere dann erreicht, wenn der Körper im Schritt b) in dem Hohlprofil befestigt wird, zum Beispiel durch ein Fügeverfahren oder durch Kleben. In diesem Fall ergibt sich ein Sandwich-Aufbau des Lenkradkranzes.

Die Erfindung sieht gemäß einer Ausführungsform vor, daß zwischen den Schritten b) und c) das Lenkradskelett im Bereich des ringförmigen Abschnitts so umgeformt wird, daß das Hohlprofil weiter geschlossen wird. Durch dieses weitere Schließen des Hohlprofils erhält es eine höhere Festigkeit.

Gemäß einer bevorzugten Ausführungsform ist vorgesehen, daß nach dem Schließen des Profils der Körper das Innere so ausfüllt, daß ein Eindringen von Schaum in das Innere des Hohlprofils verhindert wird.

Das Lenkradskelett ist vorzugsweise aus einem Blech gefertigt, das im Bereich des ringförmigen Abschnitts zum offenen Hohlprofil umgeformt wird. Ein Blechskelett zeichnet sich durch einen geringen Herstellungsaufwand aus.

Das Material des Körpers kann vorzugsweise eine deutlich geringere Zug- und Biegefestigkeit aufweisen als das Material des Skeletts.

Das erfindungsgemäße Lenkrad, das vorgenannte Vorteile ebenfalls aufweist, ist dadurch gekennzeichnet, daß das einstückige Lenkradskelett einen geschlossenen ringförmigen Abschnitt zur Bildung des Lenkradkranzes aufweist, der im Querschnitt ein offenes Hohlprofil hat, wobei in dem offenen Hohlprofil ein Körper eingebracht ist, der das Hohlprofil nahezu vollständig ausfüllt, und daß das Lenkradskelett wenigstens im Bereich des Lenkradkranzes eine Umschäumung und/oder Belederung aufweist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 ein Blechskelett eines erfindungsgemäßen Lenkrads, das durch das erfindungsgemäße Verfahren hergestellt wird,
- Figur 2 eine Querschnittsansicht durch ein durch das erfindungsgemäße Verfahren hergestelltes Lenkrad gemäß einer ersten Ausführungsform im Bereich längs einer Speiche und quer zum Lenkradkranz und
- Figur 3 einen Schnitt durch ein durch das erfindungsgemäß e Verfahren hergestelltes Lenkrad längs einer Speiche und quer zum Lenkradkranz gemäß einer zweiten Ausführungsform.

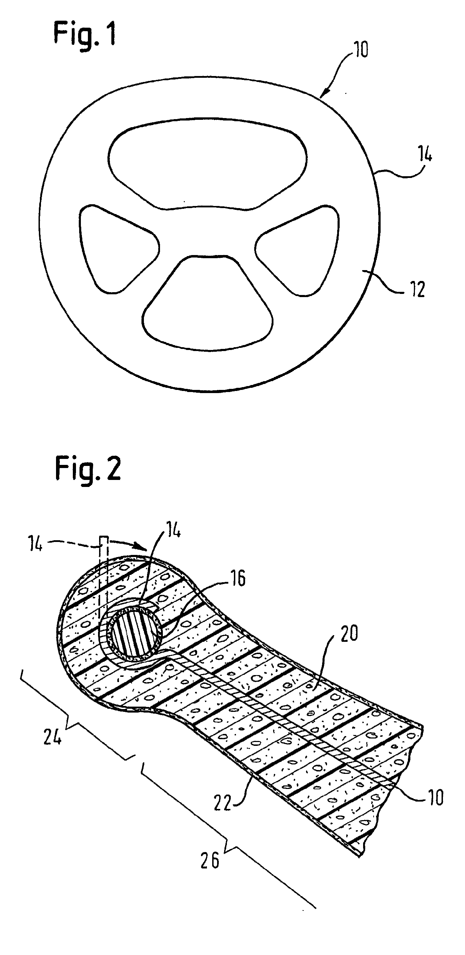

In Figur 1 ist ein einstückiges Blechskelett 10 unmittelbar nach dem Ausstanzen gezeigt, wobei das Blech anschließend durch Tiefziehen noch umgeformt wird, beispielsweise im Bereich des geschlossenen ringförmigen Abschnitts 12, der den Skelettabschnitt für den Lenkradkranz bilden wird. Im Abschnitt 12 wird der äußere Rand 14 umgeformt, so daß der ringförmige Abschnitt 12 im Querschnitt ein offenes Hohlprofil erhält, wie es in Figur 2 dargestellt ist. Der Rand 14 steht nach dem Umformen nach oben ab, wie mit unterbrochenen Linien gezeigt.

In das offene Hohlprofil wird ein ringförmiger Körper 16 zum Beispiel aus Zellulose oder aus einem billigen Kunststoffspritzmaterial eingelegt und am Hohlprofil durch Kleben oder dergleichen befestigt. Anschließend wird der nach oben stehende Rand 14 in Pfeilrichtung gebogen, um das offene Hohlprofil weiter zu schließen. Das Blech legt sich dabei an den Körper 16 an. Nach dem weitgehenden, aber nicht vollständigen Schließen des Hohlprofils füllt der Körper 16, der als Platzhalter dient, das Hohlprofil nahezu vollständig aus.

Anschließend wird das mit dem Körper 16 versehene Skelett in eine Schaumform gelegt und umschäumt. Der umschäumte Teil wird mit 20 bezeichnet. Optional kann anschließend auch noch ein Leder 22 aufgezogen werden.

Das Material des Körpers 16 kann stabiler als das Material des Skelettes 10 sein, es kann aber auch, wie im vorliegenden Fall, eine geringere Zug- und Biegefestigkeit haben als das Material des Skeletts 10.

Das durch das vorgenannte Verfahren erzeugte Lenkrad hat schließlich einen umschäumten und/oder belederten, geschlossen ringförmigen Lenkradkranz 24 sowie vom Lenkradkranz ausgehende, zu einer Nabe sich erstreckende Speichen 26.

Durch den Körper 16 wird ein Eindringen des Schaumes 20 in das Innere des Hohlprofils ausgeschlossen.

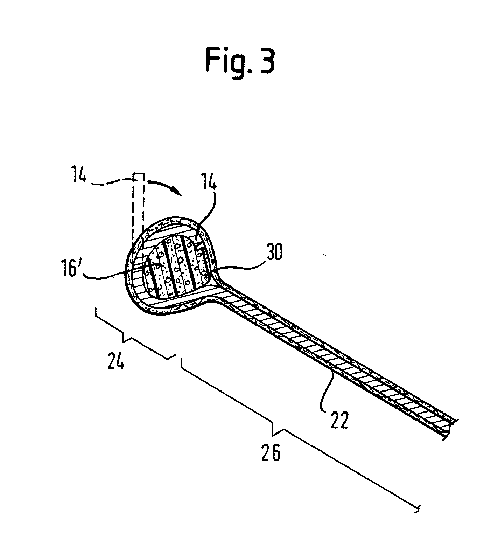

Bei der Ausführungsform nach Figur 3 erfolgt keine Umschäumung des Skeletts oder nur eine Teilumschäumung. In dem in Figur 3 gezeigten Bereich des Lenkradkranzes 24 wurde in das Hohlprofil ein Körper 16' eingelegt, der im Gegensatz zu dem Körper 16 nach Figur 2 noch einen Vorsprung 30 aufweist, der die Dicke des Blechs hat und dem Lenkradkranz 14 nach dem weitgehenden Schließen des Hohlprofils eine geschlossene Außenfläche gibt, da sich die Außenfläche des Vorsprungs 30 absatzlos an die Außenfläche des einwärts gebogenen Randes 14 anschließt.

Alternativ zu den gezeigten Ausführungsformen kann der Körper auch vor dem Umformen des Bleches nach Fig. 1 an diesem befestigt werden, so daß der Körper beim Herstellen des Hohlprofils bereits in diesem vorgesehen ist.

## Patentansprüche

1. Verfahren zum Herstellen eines Lenkrades, das einen geschlossenen ringförmigen Lenkradkranz (24) und Speichen (26) aufweist, mit einem Lenkradskelett (10) und einer das Lenkradskelett (10) umgebenden Umschäumung (20) und/oder Belederung (22),
**gekennzeichnet durch** folgende Schritte:
a) das einstückig ausgeführte Lenkradskelett (10) wird hergestellt, wobei es zur Bildung des Lenkradkranzes einen geschlossenen ringförmigen Abschnitt (12) aufweist, der im Querschnitt ein offenes Hohlprofil hat,
b) in das offene Hohlprofil ist/wird ein Körper (16), der als Platzhalter und zum nahezu vollständigen Ausfüllen des Hohlprofils dient, eingelegt und
c) das Lenkradskelett (10) wird wenigstens im Bereich des Lenkradkranzes (24) umschäumt und/oder beledert.

2. Verfahren nach Anspruch 1, **dadurch gekennzeichnet, daß** zwischen den Schritten b) und c) das Lenkradskelett (10) im Bereich des ringförmigen Abschnitts (12) so umgeformt wird, daß das Hohlprofil weiter geschlossen wird.

3. Verfahren nach Anspruch 2, **dadurch gekennzeichnet, daß** nach dem Schließen des Hohlprofils der Körper (16) das Innere des Hohlprofils so ausfüllt, daß ein Eindringen von Schaum (20) in das Innere verhindert wird.

4. Verfahren nach einem der vorhergehenden Ansprüche, **dadurch gekennzeichnet, daß** das Lenkradskelett (10) aus einem Blech gefertigt ist, welches im Bereich des ringförmigen Abschnitts (12) zum offenen Hohlprofil umgeformt wird.

5. Verfahren nach einem der vorhergehenden Ansprüche, **dadurch gekennzeichnet, daß** der Körper (16) im Schritt b) in dem Hohlprofil befestigt wird.

6. Verfahren nach einem der vorhergehenden Ansprüche, **dadurch gekennzeichnet, daß** der Körper (16) aus einem Material ist, dessen Zug- und Biegefestigkeit geringer als die des Materials des Skeletts (10) ist.

7. Verfahren nach Anspruch 6, **dadurch gekennzeichnet, daß** der Körper (16) aus Zellulose besteht.

8. Lenkrad, das einen geschlossenen ringförmigen Lenkradkranz (24) und Speichen (26) aufweist, mit einem Lenkradskelett (10) und einer das Lenkradskelett umgebenden Umschäumung (10) und/oder Belederung (22), wobei das einstückig ausgeführte Lenkradskelett (10) einen geschlossenen ringförmigen Abschnitt (12) zur Bildung des Lenkradkranzes (24) aufweist, der im Querschnitt ein offenes Hohlprofil hat, wobei in das offene Hohlprofil ein als Platzhalter dienender Körper (16) eingesetzt ist, der das Hohlprofil nahezu vollständig ausfüllt, und wobei das Lenkradskelett (10) wenigstens im Bereich des Lenkradkranzes (24) die Umschäumung (20) und/oder die Belederung (22) aufweist.
